# EUROPÄISCHE PATENTSCHRIFT

(11) **EP 1 486 416 B1**
(45) Veröffentlichungstag und Bekanntmachung des Hinweises auf die Patenterteilung: **26.11.2008**
(21) Anmeldenummer: 04013800.0
(22) Anmeldetag: 11.06.2004
(51) Int. Cl.: B64C 13/28

(54) **Vorrichtung zur Betätigung von Klappenelementen an den Tragflächen eines Flugzeuges**
Aircraft flap actuation device
Système d'actionnement des volets d'une aile d'avion

(30) Priorität: 13.06.2003 DE 10326799
(43) Veröffentlichungstag der Anmeldung: 15.12.2004
(73) Patentinhaber: Airbus Deutschland GmbH, 21129 Hamburg (DE)
(72) Erfinder: Pohl, Ulrich, Dipl.-Ing., 28717 Bremen (DE)
(74) Vertreter: Schatt, Markus F.

(56) Entgegenhaltungen:
- US-A- 3 935 754
- US-A- 4 688 744
- US-A- 4 892 274

## Beschreibung

Die Erfindung betrifft eine Vorrichtung zur Betätigung von Klappenelementen an den Tragflächen eines Flugzeuges, vorzugsweise von Landeklappen und / oder Vorflügelelementen, unter Verwendung von zwei, von einer zentralen Antriebseinheit angetriebenen Drehwellen-Antriebssträngen, die sich entlang der Tragflächen zu beiden Seiten der Antriebseinheit erstrecken und die über Antriebs- und Betätigungsmechanismen mit den Klappenelementen mechanisch verbunden sind zur Umwandlung einer rotatorischen Bewegung der Drehwellen-Antriebsstränge in translatorische Bewegungen der Klappenelemente.

Aus der US 4,688,744 ist ein Stellantriebssystem bekannt, bei dem mehrere Stellantriebe an einer Antriebswelle gekoppelt sind. Jeder Stellantrieb kann mechanisch von der Antriebswelle gelöst werden, so dass dann die mit diesem verbundene Klappe eines Seitenruders freibewegbar ist.

Landeklappen und Vorflügelelemente an Flugzeugtragflächen werden mittels Anordnungen betätigt, die aus einer zentralen Antriebseinheit, zwei links und rechts von der Antriebseinheit angeordneten Drehwellen-Antriebssträngen sowie mehreren dezentralen Antriebs- und Betätigungsmechanismen gebildet sind. In derartigen Anordnungen wird mittels der Antriebseinheit eine Rotationsbewegung erzeugt, die über die Drehwellen-Antriebsstränge zu den Antriebs- und Betätigungsmechanismen übertragen wird. Diese wandeln die rotatorische Bewegung in eine translatorische Bewegung um und übertragen diese Bewegung auf zugehörige Antriebs- und Betätigungsmechanismen, die wiederum die Landeklappen und /oder Vorflügelelemente in gewünschter Weise betätigen. Um eine gleichmässige, d. h. synchrone Betätigung aller Landeklappen bzw. Vorflügelelemente zu garantieren sind die Klappenelemente einer Tragfläche gewöhnlich mit ein und demselben Drehwellen-Antriebsstrang mechanisch verbunden.

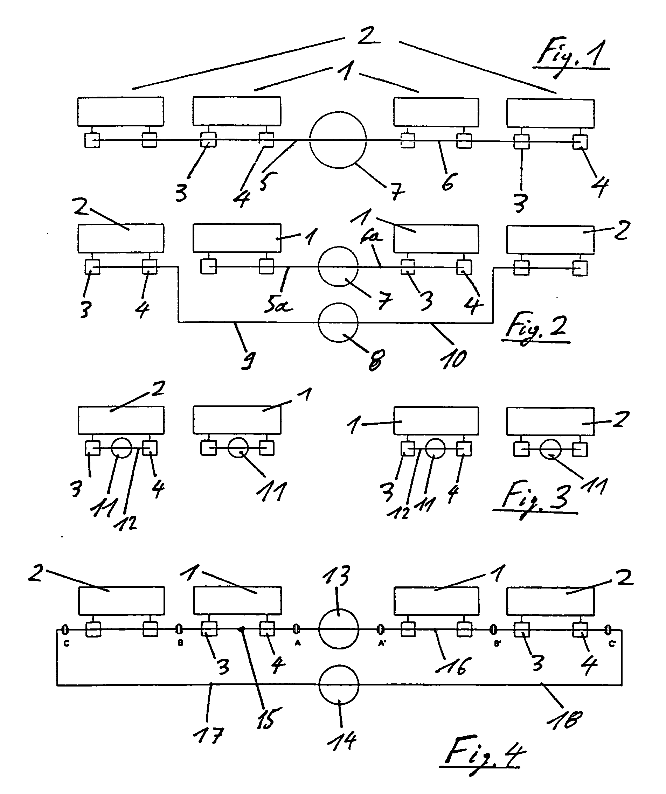

In Fig. 1 ist eine Vorrichtung der eingangs genannten Art dargestellt, wobei die inneren Landeklappen der zeichnerisch nicht dargestellten Tragflächen mit 1 und die äusseren Landeklappen mit 2 bezeichnet sind. Jede Landeklappe ist über jeweils zwei Antriebs- und Betätigungsmechanismen 3 bzw. 4 mit einem von zwei synchronisierten Drehwellen-Antriebssträngen 5 bzw. 6 einer zentralen Antriebseinheit 7 mechanisch verbunden, sodass eine Umwandlung der rotatorischen Drehwellenbewegung in eine translatorische Bewegung der Landeklappen erfolgt. Nachteiligerweise können mechanische Fehler in dieser Vorrichtung, wie z. B. ein Klemmen der Betätigungsmechanik, ein Bruch einer Drehwelle, potentiell zu lokalen Überlastungen in der Vorrichtung oder zu unerwünschtem Verhalten der Vorrichtung wie z. B. einer asymmetrischen Betätigung der Klappenelemente führen. Aus diesem Grunde wird bei einem Erkennen von derartigen Fehlern grundsätzlich die gesamte Vorrichtung stillgelegt sowie mit Hilfe von Bremsvorrichtungen in ihrer momentanen Position arretiert. Nachteil dieses Vorgehens ist der vollständige Verlust der mit dem Landklappensystem assoziierten Funktionalität bei Auftritt eines Fehlers.

Abhilfe schaffen Anordnungen, die durch Vervielfachung einiger Elemente und durch mechanische Entkopplung verschiedener Teile der Vorrichtung einen teilweisen Weiterbetrieb der Vorrichtung auch im Falle eines lokalen mechanischen Fehlers ermöglichen. Ein weiteres Beispiel für eine Vorrichtung ist aus Fig. 2 ersichtlich, wo eine Verdopplung der Antriebseinheiten und Drehwellenstränge vorgesehen ist. Hierbei treibt die erste Antriebseinheit 7 über die Drehwellen-Antriebsstränge 5a und 6a die inneren Landeklappen 1 an, während die zweite Antriebseinheit 8 die äußeren Landeklappen 2 über die Drehwellen-Antriebsstränge 9 und 10 antreibt. Bei dieser Vorrichtung ist jeweils ein teilweiser Verlust der Vorrichtungsfunktion bei einem Klemmen oder einem Ausfall der Antriebseinheit oder bei einem Bruch eines Wellenstranges zwischen einer Trennstelle und der Antriebseinheit gegeben.

Auch bei der Vorrichtung gemäß Fig. 3 tritt ein derartiger teilweiser Verlust der Vorrichtungsfunktion bei den geschilderten Ausfällen ein. Diese Vorrichtung zeigt dezentrale, voneinander mechanisch entkoppelte Antriebe 11 mit jeweils einem zugehörigen Drehwellen-Antriebsstrang 12 für die inneren bzw. äußeren Landeklappen 1 bzw. 2.

Der Erfindung liegt nun die Aufgabe zugrunde, eine Vorrichtung der eingangs genannten Art zu schaffen, die einen vollständigen oder teilweisen Weiterbetrieb im Falle des Auftretens eines lokalen mechanischen Fehlers zulässt.

Die Aufgabe wird mit den Merkmalen des Anspruchs 1 gelöst. Weitere Ausführungsformen sind in den auf diesen rückbezogenen Unteransprüchen angegeben.

Die Aufgabe wird erfindungsgemäß insbesondere dadurch gelöst, dass mindestens eine weitere zentrale Antriebseinheit mit sich zu ihren beiden Seiten entlang den Tragflächen erstreckenden Drehwellen-Antriebssträngen vorgesehen ist, dass die beiden Antriebseinheiten über die Drehwellen-Antriebsstränge derart miteinander gekoppelt sind, dass die Klappenelemente jeweils von einem Drehwellen-Antriebsstrang angetrieben werden und jeder Drehwellenstrang an je einem Ende mit den beiden Antriebseinheiten mechanisch verbunden ist, dass die Drehwellen-Antriebsstränge der ersten Antriebseinheit jeweils zwischen den Antriebs- und Betätigungselementen von zwei benachbarten Klappenelementen eine Trenneinrichtung aufweist, und dass die Trenneinrichtungen im normalen Betriebsfall geschlossen sind und die rotatorische Bewegung der Drehwellen-Antriebsstränge auf die Klappenelemente übertragen.

Ausgestaltungen der Erfindung sind in den Unteransprüchen 2 bis 5 beschrieben.

Die erfindungsgemäße Vorrichtung bringt den Vorteil mit sich, dass ein Ausfall einer Antriebseinheit oder ein Bruch eines Drehwellen-Antriebsstranges zwischen einer Trennstelle und der Antriebseinheit keinen Verlust der Vorrichtungsfunktion bewirkt, während ein Klemmen eines Antrieb- und Betätigungsmechanismus oder ein Bruch eines Drehwellen-Antriebsstranges an einer anderen als der zuvor beschriebenen Stelle zum nur teilweisen Verlust der Vorrichtungsfunktion führt. Ein weiterer Vorteil der Erfindung ist in der gewichtssparenden Bauweise gegenüber vergleichsweisen Vorrichtungen zu sehen.

In Fig. 4 der Zeichnung ist ein Ausführungsbeispiel nach der Erfindung dargestellt, und zwar werden von der gezeigten Vorrichtung zwei innere Landeklappen 1 und zwei äußere Landeklappen 2 über jeweils zwei zugehörige Antriebs- und Betätigungsmechanismen 3 und 4 betätigt. Diese Mechanismen bewirken eine Umwandlung einer von den Antriebseinheiten 13 bzw. 14 erzeugten und von den vorzugsweise synchronisierten Drehwellen-Antriebssträngen 15, 16, 17 und / oder 18 übertragenen rotatorischen Bewegung in translatorische Bewegungen der Landeklappen. Die beiden Antriebseinheiten 13 und 14 sind über die Drehwellen-Antriebsstränge 15, 16, 17 und 18 derart miteinander gekoppelt, dass jeder Drehwellen-Antriebsstrang 15, 16, 17 und 18 an je einem Ende mit den beiden Antriebseinheiten 13 und 14 mechanisch verbunden ist. Die Drehwellen-Antriebsstränge 15 bis 18 der Antriebseinheiten 13 und 14 weisen jeweils zwischen den Antriebs- und Betätigungsmechanismen 3 und 4 von zwei benachbarten Landeklappen 1 und 2 eine Trenneinrichtung C, B, A, A', B' bzw. C' auf, wobei die Trenneinrichtungen B bzw. B' den symmetrischen Trennpunkt zwischen den Drehwellen-Antriebssträngen 15 und 17 bzw. 16 und 18 bilden können. Im normalen Betriebsfall sind die Trenneinrichtung C, B, A, A', B' bzw. C' geschlossen und die rotatorische Bewegung der Drehwellen-Antriebsstränge 15 bis 18 wird auf die Landeklappen 1 und 2 übertragen. Hierbei wird die Antriebslast durch einen entsprechenden Regelungsalgorithmus auf beide Antriebseinheiten 13 und 14 verteilt. Zwei benachbarte Trenneinrichtungen können auch mindestens zwei Klappenelemente 1 und 2 mit zugehörigen Antriebs- und Betätigungselementen 3 und 4 einschließen.

Bei Eintreten eines lokalen mechanischen Fehlers in einem Vorrichtungsteil wird der betroffene Teil dadurch isoliert, dass die diesen Vorrichtungsteil einschließenden Trenneinrichtungen C, B; A, A' bzw. B', C' in den Drehwellen-Antriebssträngen 15 bzw. 16 geöffnet werden. Dieses geschieht aus Gründen der Aerodynamik symmetrisch, d.h. der äquivalente Teil des Drehwellen-Antriebsstranges 15 bzw. 16 in der gegenüberliegenden Tragfläche wird ebenfalls geöffnet. Dieses bedeutet, dass wenn die Trenneinrichtung A bzw. B bzw.

C geöffnet wird, dann wird auch die jeweilige Trenneinrichtung A' bzw. B' bzw. C' geöffnet. Nach dem öffnen der Trenneinrichtungen wird der von einem lokalen Fehler betroffene Teil des Wellenstranges stillgelegt und mit Hilfe von Bremsvorrichtungen arretiert. Der nicht betroffene Teil des Wellenstranges kann weiterhin über die verbliebene Verbindung zur nicht isolierten Antriebseinheit 13 bzw. 14 angetrieben werden.

### Bezugszeichenliste

- 1: innere Landeklappen
- 2: äussere Landeklappen
- 3: Antriebs- und Betätigungsmechanismus
- 4: Antriebs- und Betätigungsmechanismus
- 5: Drehwellen-Antriebsstrang
- 5a: Drehwellen-Antriebsstrang
- 6: Drehwellen-Antriebsstrang
- 6a: Drehwellen-Antriebsstrang
- 7: zentrale Antriebseinheit
- 8: zweite zentrale Antriebseinheit
- 9: Drehwellen-Antriebsstrang
- 10: Drehwellen-Antriebsstrang
- 11: entkoppelte Antriebe
- 12: Drehwellen-Antriebsstrang
- 13: Antriebseinheit
- 14: weitere Antriebseinheit
- 15: Drehwellen-Antriebsstrang
- 16: Drehwellen-Antriebsstrang
- 17: Drehwellen-Antriebsstrang
- 18: Drehwellen-Antriebsstrang
- A, B, C, A', B', C': Trenneinrichtungen

## Patentansprüche

1. Vorrichtung zur Betätigung von Klappenelementen (1, 2) an den Tragflächen eines Flugzeuges, vorzugsweise von Landeklappen und / oder Vorflügelelementen, mit zumindest zwei zentralen Antriebseinheiten (13, 14), mit von den zentralen Antriebseinheiten (13, 14) angetriebenen Drehwellen-Antriebssträngen (15, 16, 17, 18), die sich entlang der Tragflächen erstrecken und die über Antriebs- und Betätigungsmechanismen (3, 4) mit den Klappenelementen (1, 2) mechanisch verbunden sind,
■ wobei sich zu beiden Seiten jeder zentralen Antriebseinheit (13, 14) jeweils ein Drehwellen-Antriebsstrang (17, 18) entlang der jeweiligen Tragfläche erstreckt,
■ wobei die Klappenelemente (1, 2) jeweils von einem Drehwellen-Antriebsstrang (15, 16, 17, 18) angetrieben werden, der an jedem Ende mit jeweils einer Antriebseinheit (13, 14) mechanisch verbunden ist,
■ wobei die Drehwellen-Antriebsstränge (15, 16) der ersten Antriebseinheit (13) jeweils zwischen den Antriebs- und Betätigungsmechanismen (3, 4) von zwei benachbarten Klappenelementen (1, 2) eine Trenneinrichtung (C, B, A, A', B', C') aufweisen, mit denen zwischen zwei Trenneinrichtungen liegende Antriebs- und Betätigungsmechanismen (3, 4) aus dem Drehwellen-Antriebsstrang (15, 16, 17, 18) isoliert werden können.

2. Vorrichtung nach Anspruch 1, **dadurch gekennzeichnet, dass** die Antriebs- und Betätigungsmechanismen (3, 4) die Umwandlung von rotatorischen Bewegungen der Drehwellen-Antriebsstränge in translatorische Bewegungen der Klappenelemente (1, 2) bewerkstelligen.

3. Vorrichtung nach Anspruch 1 oder 2, **dadurch gekennzeichnet, dass** ein Regelungsalgorithmus zur Aufteilung der Antriebslast auf die Antriebseinheiten (13, 14) vorgesehen ist.

4. Vorrichtung nach einem der Voranstehenden Ansprüche, **dadurch gekennzeichnet, dass** in der Vorrichtung eine Funktion integriert ist, die bei Eintreten eines lokalen mechanischen Fehlers in einem zwischen zwei Trenneinrichtungen (C, B, A, A', B', C') eines Drehwellen-Antriebsstrangs (15, 16) liegenden Vorrichtungsteil dieser **dadurch** isoliert wird, dass die diesen Vorrichtungsteil einschliessenden Trenneinrichtungen (C, B; A, A' bzw. B', C') des Drehwellen-Antriebsstrangs (15, 16) geöffnet werden.

5. Vorrichtung nach Anspruch 4, **dadurch gekennzeichnet, dass** mindestens eine Bremsvorrichtung zur Arretierung eines nach dem Öffnen der Trenneinrichtungen (C, B; A, A' bzw. B', C') isolierten Vorrichtungsteiles vorgesehen ist.

6. Vorrichtung nach Anspruch 1, 2, 4 oder 5, **dadurch gekennzeichnet, dass** zwei benachbarte Trenneinrichtungen (C, B; A, A' bzw. B', C') mindestens zwei Klappenelemente (1, 2) mit zugehörigen Antriebs- und Betätigungselementen (3, 4) einschließen.

## Claims

1. A device for actuating flap elements (1, 2) on the aerofoils of an aircraft, preferably of landing flaps and/or leading-edge flap elements, comprising at least two central drive units (13, 14), comprising rotary shaft drive trains (15, 16, 17, 18) driven by the central drive units (13, 14), which drive trains extend along the aerofoils and are mechanically connected to the flap elements (1, 2) by means of drive and actuating mechanisms (3, 4),
- wherein on both sides of each central drive unit (13, 14) respectively one rotary shaft drive train (17, 18) extends along the respective aerofoil,
- wherein the flap elements (1, 2) are each driven by a rotary shaft drive train (15, 16, 17, 18) which is mechanically connected at each end to respectively one drive unit (13, 14),
- wherein the rotary shaft drive trains (15, 16) of the first drive unit (13) comprise a separating device (C, B, A, A', B', C') between each of the drive and actuating mechanisms (3, 4) of two adjacent flap elements (1, 2), by which means drive and actuating mechanisms (3, 4) located between two separating devices can be isolated from the rotary shaft drive train (15, 16, 17, 18).

2. The device according to claim 1, **characterised in that** the drive and actuating mechanisms (3, 4) accomplish the conversion of rotational movements of the rotary shaft drive trains into translational movements of the flap elements (1, 2).

3. The device according to claim 1 or 2, **characterised in that** a regulating algorithm is provided for distributing the drive load to the drive units (13, 14).

4. The device according to one of the preceding claims, **characterised in that** a function is integrated in the device, which, in the event of a local mechanical defect in a device part located between two separating devices (C, B, A, A', B', C') of a rotary shaft drive train (15, 16), this is isolated by opening the separating devices (C, B; A, A' or B', C') of a rotary shaft drive train (15, 16) enclosing this device part.

5. The device according to claim 4, **characterised in that** at least one braking device is provided for locking a device part isolated after opening the separating devices (C, B; A, A' or B', C').

6. The device according to claim 1, 2, 4 or 5,
**characterised in that** two adjacent separating devices (C, B; A, A' or B', C') enclose at least two flap elements (1, 2) with related drive and actuating elements (3, 4).

## Revendications

1. Dispositif pour actionner des éléments de volets (1, 2) sur les surfaces porteuses d'un avion, de préférence des volets d'atterrissage et/ou des éléments de fente avant, comportant au moins deux unités d'entraînement centrales(13, 14), comportant des groupes propulseurs à arbres rotatifs (15, 16, 17, 18) entraînés par les unités d'entraînement centrales (13,14), qui s'étendent le long des surfaces porteuses et qui sont reliées mécaniquement aux éléments de volets (1, 2) par l'intermédiaire de mécanismes d'entraînement et d'actionnement (3, 4),
- dans lequel un groupe propulseur à arbre rotatif (17, 18) s'étend respectivement sur les deux côtés de chaque unité d'entraînement centrale (13, 14) le long de la surface porteuse respective,
- dans lequel les éléments de volets (1, 2) sont respectivement entraînés par un groupe propulseur à arbre rotatif (15, 16, 17, 18), qui est relié mécaniquement à chaque extrémité à une unité d'entraînement (13, 14) respective,
- dans lequel les groupes propulseurs à arbres rotatifs (15, 16) de la première unité d'entraînement (13) présentent respectivement entre les mécanismes d'entraînement et d'actionnement (3, 4) des deux éléments de volets (1, 2) voisins un dispositif de séparation (C, B, A, A', B', C'), avec lesquels les mécanismes d'entraînement et d'actionnement (3, 4) situés entre deux dispositifs de séparation peuvent être isolés du groupe propulseur à arbre rotatif (15, 16, 17, 18).

2. Dispositif selon la revendication 1, **caractérisé en ce que** les mécanismes d'entraînement et d'actionnement (3, 4) effectuent la conversion des mouvements de rotation des groupes propulseurs à arbres rotatifs en mouvements de translation des éléments de volets (1, 2).

3. Dispositif selon la revendication 1 ou 2, **caractérisé en ce qu'**un algorithme de régulation est prévu pour répartir la charge d'entraînement sur les unités d'entraînement (13, 14).

4. Dispositif selon une des revendications précédentes, **caractérisé en ce qu'**une fonction est intégrée dans le dispositif, laquelle, lorsque une erreur mécanique locale survient dans une partie de dispositif située entre deux dispositifs de séparation (C, B, A, A', B', C') d'un groupe propulseur à arbre rotatif (15, 16) isole celle-ci en ouvrant les dispositifs de séparation (C, B; A, A' respectivement B', C') se rattachant à cette partie du dispositif du groupe propulseur à arbre rotatif (15, 16).

5. Dispositif selon la revendication 4, **caractérisé en ce que** au moins un dispositif de freinage est prévu pour arrêter une partie du dispositif isolée après l'ouverture des dispositifs de séparation (C, B; A, A' bzw. B', C')

6. Dispositif selon la revendication 1, 2, 4 ou 5, **caractérisé en ce que** deux dispositifs de séparation voisins (C, B; A, A' respectivement B', C') rattachent au moins deux éléments de volets (1, 2) avec des éléments d'entraînement et d'actionnement (3, 4) correspondants.
